# EUROPEAN PATENT APPLICATION

(11) **EP 1 894 885 A1**
(43) Date of publication of application: **05.03.2008**
(21) Application number: 06767555.3
(22) Date of filing: 22.06.2006
(51) Int. Cl.: C01B 7/04, B01J 23/46

(54) **REACTOR FOR CHLORINE PRODUCTION AND PROCESS FOR PRODUCING CHLORINE**

(30) Priority: 22.06.2005 JP 2005181607
(71) Applicant: Sumitomo Chemical Company, Limited, Tokyo 104-8260 (JP)
(72) Inventor: MORI, Yasuhiko, Ehime 792-0017 (JP)
(74) Representative: Vossius & Partner
(86) International application number: PCT/JP2006/312938
(87) International publication number: WO 2006/137583

(57) **Abstract**

A rector for producing chlorine according to the present invention is a multi-tubular heat exchanger type reactor for use in producing chlorine by oxidizing hydrogen chloride with oxygen, **characterized in that**
an interior of a reactor shell is divided in a tube-axis direction by a partition into a plurality of regions such that heat mediums individually circulate through respective ones of the divided regions;
said reactor comprising a temperature control means for controlling the temperature of at least one heat medium selected from said heat mediums, the temperature control means being a cooler and/or a heater;
catalysts having different catalytic activities are charged in the form of layers from inlets towards outlets of reaction tubes of the reactor, the catalysts being ruthenium oxide catalysts; and
40% or less of the whole ruthenium is in the region of the reaction tubes ranging from the reaction tube inlet to less than 50% of the reaction tube length, whereas 60% or more of the whole ruthenium is in the region of the reaction tubes ranging from 50 to 100% of the reaction tube length from the reaction tube inlet.

A process for producing chlorine according to the present invention is **characterized in that** the process is carried out by using the above reactor, and comprises the step of supplying a hydrogen chloride-containing gas and an oxygen-containing gas into the above reactor so as to oxidize the hydrogen chloride with the oxygen at a pressure of 0.1 to 1 MPaG and a temperature of 200 to 500 °C.

## Description

### TECHNICAL FIELD

The present invention relates to a reactor for producing chlorine and a process for producing chlorine by using the reactor. More specifically, the invention relates to a reactor for producing chlorine, which can keep a catalyst activity stable through an effective use of catalysts, as well as to a process for steadily producing chlorine from hydrogen chloride with high yield by means of the reactor.

### BACKGROUND OF THE INVENTION

Chlorine is useful as a raw material for producing vinyl chloride, isocyanate compounds, polycarbonates, chlorinated hydrocarbons and the like. The production of them involves a generation of large quantities of hydrogen chloride as a by-product. Methods for producing chlorine by oxidizing the by-product hydrogen chloride in the presence of a catalyst have been known for a long time. In such methods, a Deacon catalyst, a chromium oxide catalyst, a ruthenium oxide catalyst or the like is used (see JP H9-67103 A, EP0743277 and USP5871707, for example). The obtained chlorine can be used as the raw material of the vinyl chloride, the isocyanate, the polycarbonates and the chlorinated hydrocarbons, and thus a self-circulation of chlorine can be performed in each of the producing processes of them.

The method using the Deacon catalyst or the chromium oxide catalyst is conducted at relatively high temperatures. Thus, a catalyst lifetime is not enough long in this method. Moreover, the method using the chromium oxide catalysts involves a problem of treating a harmful chromium.

The method using a ruthenium oxide catalyst is preferable since it has a longer catalyst lifetime. This is due to that this method can be performed at temperatures lower than temperatures for the case of the method using the Deacon catalyst or the chromium oxide catalyst. However, there is a desire for an industrially improved methods that can efficiently produce chlorine by using a catalyst more effectively.

### DISCLOSURE OF THE INVENTION

An object of the present invention is to provide a reactor for producing chlorine, which can keep a catalyst activity stable through an effective use of catalysts. Another object of the present invention is to provide a process for steadily producing chlorine from hydrogen chloride with high yield by means of the above reactor.

According to the present invention, there is provided a multi-tubular heat exchanger type reactor for use in producing chlorine by oxidizing hydrogen chloride with oxygen, wherein an interior of a reactor shell is divided in a tube-axis direction by at least one partition into a plurality of regions, the reactor comprising a temperature control means for controlling the temperature of at least one heat medium selected from heat mediums that individually circulate through respective ones of the divided regions.

According to the present invention, there is also provided a process for producing chlorine, wherein the process is performed by means of a multi-tubular heat exchanger type reactor for use in producing chlorine by oxidizing hydrogen chloride with oxygen wherein an interior of a reactor shell is divided in a tube-axis direction by at least one partition into a plurality of regions; said reactor comprising a temperature control means for controlling the temperature of at least one heat medium selected from heat mediums that individually circulate through respective ones of the divided regions, the process comprising the step of supplying a hydrogen chloride-containing gas and an oxygen-containing gas into said reactor so as to oxidize the hydrogen chloride with the oxygen at a pressure of 0.1 to 1 MPaG and a temperature of 200 to 500 °C.

With the use of the reactor of the present invention, the catalysts can be effectively used and a catalytic activity can be kept stable. As a result, chlorine can be steadily produced from hydrogen chloride with high yield.

### BRIEF DESCRIPTION OF THE DRAWINGS

Fig. 1 is a schematic view showing an example of a reactor for producing chlorine according to the present invention;
Fig. 2 is a schematic view showing another example of the reactor for producing chlorine according to the invention;
Fig. 3 is a view showing a temperature distribution of catalyst layers, which was obtained in Example; and
Fig. 4 is a view showing transitions of the HCL conversion rate, which was obtained in Example.

### Reference numerals:

1: Reactor for producing chlorine
2: Reaction tube
3: Reactor shell
7: Heat medium tank
8: Cooler
9: Preheater
10: Upper plate for tubes (upper tube plate)
11: Partition (Partition plate)
12: Lower plate for tubes (lower tube plate)
13: Baffle plate
31 - 34: Divided regions
41 - 44: Heater
51 - 54: Circulation tank
61 - 64: Circulating pump
81 - 84: Cooler
A: Raw material compound
B: Product
C0 - C4: Heat medium
U1 - U4: Flow regulating valve
V1 - V4: Flow regulating valve

### BEST MODES FOR CARRYING OUT THE INVENTION

The reactor for producing chlorine according to the present invention is a heat exchange type reactor with a plurality of tubes, wherein an interior of a reactor shell is divided in a tube-axis direction by partition(s) into a plurality of regions, the reactor comprising a temperature control means for controlling the temperature of at least one heat medium selected from heat mediums that individually circulate through respective ones of the divided regions.

Hereinafter, the reactor for producing chlorine according to the invention will be described with reference to the accompanying drawings.

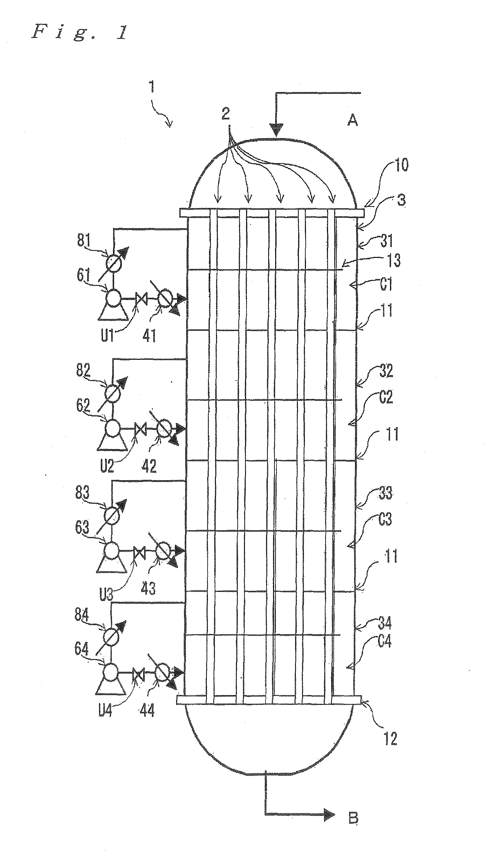

Fig. 1 is a cross-sectional view that schematically illustrates the reactor for producing chlorine according to the invention. The reactor (1) for producing chlorine, which is a multi-tubular heat exchanger type reactor, mainly comprises reaction tubes (2) and a reactor shell (3). The reaction tubes (2) are fixed to the reactor shell (3) by means of an upper tube plate (10) and a lower tube plate (12)

The reactor shell (3) is divided in a tubes-axis direction into four-stage regions (31 - 34) by partitions. The number of the divided regions is not limited to 4, and is typically 2 to 10, preferably 3 to 8, and more preferably 4 to 6. When the number of the regions is 3 or more, especially 4 or more, the exothermic amount per unit region becomes relatively small so that the effect of the reactor (1) is promoted. From that standpoint, it is preferred that the number of the regions is 3 or more, especially 4 or more.

In order to divide the reactor shell (3) into a plurality of regions (31 - 34), the partition (11) such as an intermediate tube plate or a segregating plate is typically used. The intermediate tube plate is a partition which is provided in the reactor shell (3) in close contact with the reaction tubes (2) so that the heat mediums (C1, C2) do not move between the two neighboring regions (31, 32). The segregating plate is a partition which is provided in the reactor shell (3) such that a space between each partition and each reaction tube (2) is formed, in which case the heat mediums (C1, C2) can slightly move between the two neighboring regions (31, 32).

Heat mediums (C) to be circulated through the respective regions (31 - 34) are selected as required depending on a desired reaction temperature, easiness in the handling of heat mediums and the like. Examples of the heat mediums (C) include: inorganic heat mediums consisting of inorganic substances such as molten salt (e.g., HTS: Heat Transfer Salt), for example a mixture of 40 mass% of sodium nitrite, 7 mass% of sodium nitrate and 53 mass% of potassium nitrate or a mixture of 50 mass% of sodium nitrite and 50 mass% of potassium nitrate; organic heat mediums consisting of a mixture of alkylbiphenyls, biphenyls and diphenyl oxides, a mixture of biphenyls and diphenyl ethers, triphenyls, dibenzyl toluenes, alkylbenzenes, alkylnaphthalenes, arylalkyls or the like; water; ionic liquids; and the like.

In the regions (31 - 34) formed within the reactor shell (3), a baffle plate (13) may be provided to adjust the flow direction of the heat mediums (C1 - C4). The baffle plate may be in the form of disc, disc with openings, segmental disc or the like. Typically, the baffle plate (13) is provided so that the flow direction of the heat medium (C1) becomes generally orthogonal to the reaction tubes (2). The baffle plate (13) may be provided either in the all regions (31 - 34) or in only the region(s) from which it is desired to particularly eliminate reaction heat with high efficiency. Also, the number of the baffle plates may differ from region to region. The number of baffle plates to be provided for one region (e.g., region 31) is typically 1 to 7 or so. The baffle plates, when used in plural numbers, are commonly placed such that their openings are staggered to each other as described in USP No. 3807963.

As described above, the heat mediums (C1 - C4) individually circulate through the respective regions (31 - 34). The reactor comprises a temperature control means for controlling the temperature of at least one heat medium selected from the above heat mediums (C1 - C4). It is preferred that the temperature control means is provided for each of the divided regions.

In order to control the reaction temperature(s) in the region(s) by at least one temperature control means, the temperature(s) of the circulating heat medium(s) is(are) controlled. The temperature control means provided for each of the divided regions is a cooler and/or a heater.

In the reactor (1) illustrated in Fig. 1, the temperature control means is provided for each of the regions. Circulating pumps (61 - 64) and coolers (81 - 84) are provided for respective ones of the divided regions. The circulating pumps (61 - 64) individually transfer respective ones of the heat mediums (C1 - C4) such that the heat mediums (C1 - C4) individually circulate through respective ones of the coolers (81 - 84). As a result, the cooled heat mediums (C1 - C4) are individually circulated through the respective ones of the divided regions (31 - 34).

For example by individually controlling the cooled temperatures of the heat mediums (C1 - C4) by means of the respective coolers (81 - 84), temperatures of the heat mediums (C1 - C4) circulating through the respective regions can be individually controlled so that the respective regions (31 - 34) are individually affected.

Further, the reactor (1) comprises heaters (41 - 44) so as to individually heat respective ones of the circulating heat mediums (C1 - C4). Each of the heaters (41 - 44) is provided on the piping between each of flow regulating valves (U1 - U4) and each of the regions (31 - 34). By means of the heaters (41 - 44), all the heat mediums (C1 - C4) circulating through the regions (31 - 34) can be individually heated, independently of each other.

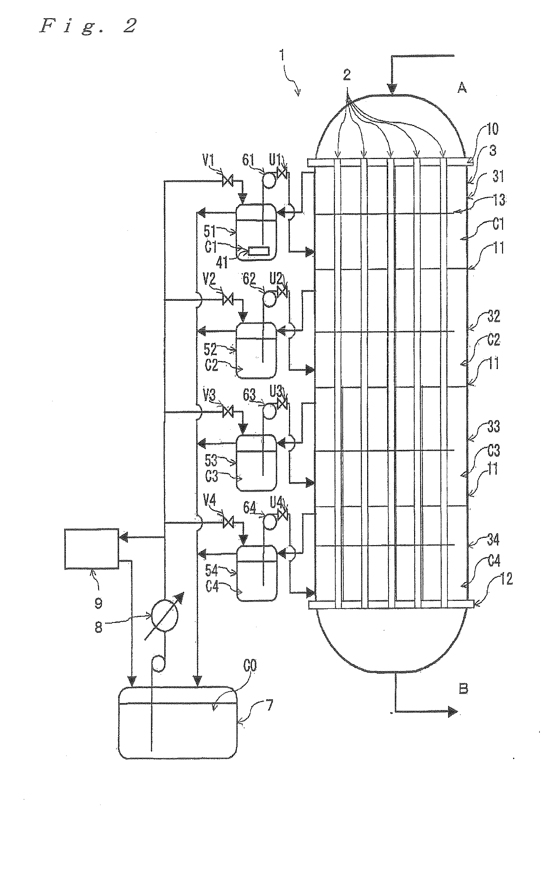

Fig. 2 is a cross-sectional view that schematically illustrates another reactor for producing chlorine according to the invention. This reactor is also a multi-tubular heat exchanger type reactor in which the divided four-stage regions (31 - 34) are formed, as in the case of the reactor illustrated in Fig. 1.

In a case of the reactor (1) illustrated in Fig. 2, the heat mediums (C1 - C4) for the respective regions (31 - 34) are cooled by using a precooled heat medium (C0). In other words, this reactor (1) comprises the circulating pumps (61 - 64) and circulation tanks (51 - 54) for the respective regions (31 - 34) wherein the circulating pumps (61 - 64) individually circulate respective ones of the heat mediums (C1 - C4) through respective ones of the regions (31 - 34) and respective ones of the circulation tanks (51 - 54), in which case the precooled heat medium (C0) is distributed to respective ones of the circulation tanks (51 - 54). By distributing the preliminarily-cooled heat medium (C0) to the circulation tanks (51 - 54), the heat mediums (C1 - C4) used for the regions (31 - 34) are cooled. Temperatures of the heat mediums (C1 - C4) circulating through the respective regions can be individually measured by thermometers placed in respective ones of the circulation tanks (51 - 54) and/or respective ones of the regions (31 - 34). Respective ones of the divided regions (31 - 34) can be individually affected so that the temperatures of the heat mediums (C1 - C4) in respective ones of the divided regions (31 - 34) reach the predetermined temperatures, for example by controlling the amounts of the distributed heat mediums (C0) by means of flow regulating valves (VI - V4), each of the valves being provided between a heat medium tank (7) and each of the circulation tanks (51 - 54).

In this reactor (1), a cooler (8) is provided for the heat medium tank (7) so that the heat medium (C0) is cooled by this cooler (8). As a refrigerant for the cooler (8), water is suitably used, in which case the resulting steam can be used for the process so that an efficient recovery of the reaction heat is achieved. Excess heat mediums (C1 - C4) overflowing from the circulation tanks (51 - 54) are fed to the heat medium tank (7). It is preferred that the circulation tanks (51 - 54) are provided as close to respective ones of the divided regions (31 - 34) as possible because the length of the piping between each region and each circulation tank is reduced. Alternatively, a preheater (9) is provided for the heat medium tank (7) so as to heat the heat medium (C0). In this case, the heat medium (C0) can be heated to reach a predetermined temperature at a startup or the like, followed by being supplied to the circulation tanks (51 - 54). As the preheater (9), an electric heater may be preferably used.

In a case where the interior of the reactor shell (3) of the reactor (1) is divided by the segregating plates, it is preferred that the liquid levels of the heat mediums (C1 - C4) in the circulation tanks (51 - 54) are the same as each other since the heat mediums (C1 - C4) are prevented from moving between the neighboring ones of the regions (31 - 34). It is also preferred that the flow rates of the heat medium circulating through the regions (31 - 34) and the circulation tanks (51 - 54) are regulated by circulation flow regulating valves (U1 - U4) in order to minimize the movement of the heat mediums (C1 - C4) between the neighboring ones of the divided regions (31 - 34). Liquid levels of the heat mediums in the circulation tanks (51 - 54) can be measured by conventional level gauges (not shown).

The reactor (1) comprises a heater (41) for heating the heat medium (C1) of the region (31) independently of the heat mediums (C2 - C4) of the other regions (32 - 34). The heater (41) may be an electric heater or a heat exchanger type heater, for example. It is preferred that the electric heater is used.

Fig. 2 illustrates that the heater (41) is provided only for the region (31). However, it is preferred that the heaters are provided for respective ones of the regions (31 - 34), as in the reactor illustrated in Fig. 1 because the temperatures of the respective regions (31 - 34) can be controlled more accurately.

As the circulating pumps (61 - 64) of the reactor illustrated in Figs. 1 and 2, axial-flow pumps, centrifugalvortex pumps or the like are used. It is preferred that vertical type centrifugal volute pumps are used.

Further, the reactor parts which are to be in direct contact with a process gas (e.g., gas flowing in the reaction tubes) are made of nickel or nickel lining.

By using of the reactor (1) of the invention, the temperatures of respective ones of the divided regions can be accurately controlled more easily as required, so that the regions can be easily kept at desired reaction temperatures even when, for example, a less amount of the supplied raw material compound (A) and a less exothermic amount of the exothermic reaction are involved.

For example, when the raw material compound (A), before sufficiently preheated, is supplied to the reaction tubes (2), the reaction temperature becomes low in vicinities of inlets of the reaction tubes (2). However, with the provision of the heater (41) for heating the heat medium (C1) in the vicinities of the inlets of the region (31), as illustrated in Figs. 1 and 2, it is possible to heat only the heat medium (C1) of the region (31) without heating the heat mediums (C2 - C4) of the other regions (32 - 34). As a result, it is easily achievable to keep the region (31) at a predetermined reaction temperature while keeping the other regions (32 - 34) at predetermined reaction temperatures.

Whereas the catalysts charged in the vicinities of the inlets (31) of the reaction tubes (2) tend to deteriorate relatively earlier, the catalysts charged in the vicinities of outlets (34) tend to deteriorate relatively slower. Therefore, when the catalysts located in the region (31) corresponding to the vicinities of the inlets has deteriorated with the result of a lowered yield in the region (31), the catalyst (C4) located in the region (34) corresponding to vicinities of the outlets can be then heated to increase the reaction temperature in the region (34), and thereby the yield obtained in this region (34) can be increased.

The controlling of the temperatures is not limited to the one as illustrated in Figs. 1 and 2 wherein the circulating pumps are provided for respective ones of the divided regions to achieve the circulations of respective ones of the heat mediums. No circulation tank is possible, for example. In this case, the heat mediums are distributed from such a heat medium tank as illustrated in Fig. 2 via flow regulating valves and cooler(s) or heater(s) to respective ones of the divided regions, and then the distributed heat mediums are returned directly from respective ones of the regions to the heat medium tank.

In each of the reaction tubes, it is typical that catalysts having different catalytic activities are charged in the form of layers. Preferably, the catalysts are charged such that a catalytic activity is higher from inlets towards outlets of the reaction tubes. More specifically, catalysts having different catalytic activities due to their different compositions or production methods and/or particle sizes are used. Alternatively the catalysts are diluted with fillers made only of an inert substance and/or a support, so that they have different catalytic activities. Alternatively, an inert substance may be charged at the inlet portions and/or the outlet portions of the catalyst layers, and/or, the inert substance may be charged between the catalyst layers. The inert substance is a solid substance that is inactive to the process gas, and may be molded bodies made of alumina, silica, silicon carbide, nickel or the like. It is particularly preferred that spherical bodies made of α-alumina are used.

The catalysts are charged in each of the reaction tubes, such that the respective tube portions located in respective ones of the divided regions of the reactor shell have different catalytic activities from each other. However, there is no need to limit to this. For example, a plurality of catalysts having different catalytic activities may be charged in one portion of each reaction tube, which portion is located in one of the divided regions. Also, the catalysts having the same catalytic activities as each other may be charged in a plurality of the neighboring portions of each reaction tube, which portions are located in a plurality of the neighboring regions. In other words, the divisions of the shell and the catalyst regions having different catalytic activities do not necessarily need to be in a one-to-one correspondence.

As the catalyst for use in producing chlorine by oxidizing hydrogen chloride with oxygen, ruthenium oxide catalysts are preferable. In particular, the ruthenium oxide catalysts in which ruthenium oxide is supported on a titanium oxide-containing support are more preferable.

As these ruthenium oxide catalysts, those which are prepared according to methods described in JP H9-67103 A and JP 2000-281314 A are preferably used.

A catalyst particularly suitable for the present invention may be a supported ruthenium oxide catalyst or a ruthenium-oxide composite oxide type catalyst which contains 1 to 20 wt% of ruthenium oxide and which has a mean size (central diameter) of 1.0 to 10.0 nm, but not limited to this.

As to the configuration of the catalyst, the catalyst is used in the form of spherical particles, cylindrical pallets, extruded shape, ring shape or honeycomb shape, or a granular shape with an appropriate size obtained by pulverizing and classifying a molded material. In this case, the catalyst diameter is preferably not more than 5 mm. The reason for this is that the catalyst diameter of more than 5 mm may cause a deterioration of the catalytic activity. The lower limit of the catalyst diameter is not particularly limited, but excessively smaller catalyst diameters would lead to increased pressure losses in the charged catalyst layers. Thus, catalysts with catalyst diameters of 0.5 mm or more are typically used. It is noted that the term "catalyst diameter", as used herein, refers to a diameter of spheres for spherical particle shapes, a diameter of a cross section for cylindrical pallet shapes, and a maximum diameter of a cross section for the other shapes.

In a case where the ruthenium oxide catalysts are used, about 40% or less of the whole amount of Ru is charged in the region of the reaction tubes ranging from the reaction tube inlet to less than 50% of the reaction tube length, whereas about 60% or more of the whole amount of the Ru is charged in the region of the reaction tubes ranging from 50 to 100% of the tube length from the reaction tube inlet. It is preferred that about 10% or less of the whole amount of Ru is charged in the region of the reaction tubes ranging from the reaction tube inlet to less than 20% of the reaction tube length, and about 40% or more of the whole amount of the Ru is charged in the region of the reaction tubes ranging from 70 to 100% of the reaction tube length from the reaction tube inlet. It is more preferred that about 10% or less of the whole amount of Ru is charged in the region of the reaction tubes ranging from the reaction tube inlet to less than 20% of the reaction tube length, 25% or less of the whole amount of the Ru is charged in the region of the reaction tubes ranging from 20% to less than 50% of the reaction tube length from the reaction tube inlet, 30% or less of the whole amount of the Ru is charged in the region of the reaction tubes ranging from 50% to less than 70% of the reaction tube length from the reaction tube inlet, and 40% or more of the whole amount of the Ru is charged in the region of the reaction tubes ranging from 70 to 100% of the reaction tube length from the reaction tube inlet. Due to such a distribution of Ru, a desirable controlling of the temperature can be performed (for example, an excessive heat generation attributable to the charging of high activity catalysts at inlet portions of the reactor can be prevented), and thereby, a desired conversion rate of the hydrogen chloride can be achieved.

The production of chlorine by oxidizing hydrogen chloride with oxygen is carried out by using the above-described reactor (i.e., a multi-tubular heat exchanger type reactor in which the interior of the reactor shell is divided in the tube-axis direction by at least one partition, and a temperature control means is provided in at least one of the divided regions to control the temperature of the circulating heat medium), and preferably by charging the above-described ruthenium oxide catalysts in a manner as described above.

The hydrogen chloride gas is supplied into the reactor wherein a pressure condition is about 0.1 to 1 MPaG, preferably about 0.1 to 0.8 MPaG, more preferably about 0.1 to 0.6 MPaG and a temperature condition is about 200 to 500°C, preferably about 200 to 380°C. Too low reaction temperatures may cause a conversion rate of the hydrogen chloride to lower, whereas too high reaction temperatures may cause catalytic components to volatilize.

Hydrogen chloride in a gaseous form is supplied into the reactor. The origin of the hydrogen chloride is not limitative. For example, the hydrogen chloride gas obtained from a hydrogen chloride generation source may be directly supplied into the reactor. Alternatively, the hydrogen chloride gas may be absorbed in water to give hydrochloric acid, and in this case a fresh hydrogen chloride gas to be supplied into the reactor can be obtained by heating the resulting hydrochloric acid.

In a case where the hydrogen chloride contains, as impurities, some compounds deactivating the catalysts (e.g., organic substance, sulfur compound or the like), the purity of the resulting chlorine may lower, polychlorinated substances may be generated, or the catalytic activity may deteriorate. Therefore, prior to the supply of the hydrogen chloride, those impurities are removed by an adsorption process using absorbents, a water washing process or the like.

In a case where a hydrogen chloride gas contains, as impurities, a carbonyl sulfide or other substances that are insoluble to water, the hydrogen chloride gas is absorbed in water so as to give hydrochloric acid. This leads to a removal of the impurities. The fresh hydrogen chloride gas to be supplied can be obtained by heating the resulting hydrochloric acid. By means of an activated carbon or the like, organic compounds can be removed prior to the supply. In a case where the hydrogen chloride is in a gaseous state, the organic substances may be directly removed by an adsorption thereof on the activated carbon or the like. In such case, alternatively, the organic substances may be firstly condensed through a pressurization process and a cooling process so that some of them are preliminarily removed, followed by being subjected to an adsorption removal process using the activated carbon or the like. The impurities may include aromatic compounds such as benzene, toluene, chlorobenzene, dichlorobenzene and nitrobenzene. These aromatic compounds can be removed by the activated carbon since they tend to be adsorbed onto the activated carbon under gaseous phase condition or liquid phase condition. The used activated carbon on which organic substances have been adsorbed can be regenerated by a known method. For example, the desorption of the organic substances from the activated carbon can be performed by an aeration process using a heated nitrogen, air or other gases. The regeneration of the activated carbon leads to a reuse of the activated carbon. Low-boiling-point organic compounds such as ethane, propane, dichloroethane and chloroform are hard to be adsorbed onto the activated carbon. Thus, in a case where a hydrogen chloride gas contains the low-boiling-point organic compounds, the hydrogen chloride gas may be absorbed in water for the purpose of removing most of the organic compounds, and in this case a fresh hydrogen chloride gas to be supplied can be obtained by heating the resulting hydrochloric acid.

The generation of hydrogen chloride from hydrochloric acid is carried out typically by supplying the hydrochloric acid to a stripping tower such as a packed tower, followed by being heated by means of a reboiler using steam. In this case, hydrochloric acid having an azeotropic composition (about 20 wt%) can be typically obtained. This hydrochloric acid may be used for any purpose if the concentration thereof is suitable, or may be suitably recycled to a hydrogen chloride generation plant so as to be used for an absorption of hydrogen chloride.

The steam amount required for the heating step in a generation process of the hydrogen chloride decreases with increasing concentration of the hydrogen chloride contained in the hydrochloric acid. It is preferred that the amount of the heating steam is reduced by heat-exchanging between a high-temperature hydrochloric acid extracted from the tower bottom and a supplied hydrochloric acid. The stripping tower may be made of tantalum, carbon, fluororesin lining. In particular, it is preferable to use the fluororesin lining in which fluororesin sheets are provided in such a double setting that the space between the sheets communicates with the external, as described in JP 2003-63591 A.

The reaction is carried out under a pressure condition of about 0.1 to 1 MpaG. In order to obtain such pressure condition, the hydrogen chloride gas is pressurized by a known compressor (blower). The compressor may be a turbo-type axial-flow compressors, centrifugal compressors, displacement-type reciprocating compressors, screw-type compressors or the like. The compressor to be used is selected in consideration of a necessary pressure and a flow rate. It is preferred that a dried hydrogen chloride gas is pressurized since such gas can prevent a corrosion of the compressor.

As an oxygen for the reaction, an oxygen-containing gas are used. Such gas may be oxygen gas or air. It is preferred that the gas has an oxygen concentration of 80 vol% or more. It is more preferred that the gas has an oxygen concentration of 90 vol% or more. The gas may contain not only oxygen but also nitrogen (N₂), argon (Ar), carbon dioxide gas (CO₂) and the like.

In a case of the oxygen concentration of lower than 80 vol%, an oxygen concentration of the gas which is obtained by the refining step and consists mainly of the unreacted oxygen may become too low. As a result, in some cases, the amount of the gas supplied to the reaction step has to be reduced due to a circulation step. The oxygen-containing gas having an oxygen concentration of 80 vol% or more can be obtained by a conventional industrial process such as an air pressure swing process or a low-temperature separation process (cryogenic separation process).

The theoretical molar amount of oxygen relative to 1 mole of hydrogen chloride is 0.25 mol. It is preferable to supply more than the theoretical amount of oxygen. It is more preferable to supply 0.25 to 2 moles of oxygen relative to 1 mole of hydrogen chloride. Too small quantities of oxygen may cause a conversion rate of the hydrogen chloride to lower, whereas too large oxygen quantities may cause, in some cases, a difficulty in separating the obtained chlorine and the unreacted oxygen from each other.

In general, a mixture of a hydrogen chloride-containing gas and a oxygen-containing gas is supplied into the reactor. However, in order that a temperature distribution within the catalyst layers is smoothed for an effective use of the catalyst layers as well as for a stable catalytic activity, the reaction is preferably carried out in the presence of moisture (water). The molar ratio of moisture to hydrogen chloride is preferably 0.001 to 1.0, more preferably 0.005 to 1.0, most preferably 0.01 to 1.0. Too small molar ratios of moisture to hydrogen chloride may make it difficult to smooth the temperature distribution within the catalyst layers, whereas too large molar ratios of moisture to hydrogen chloride may cause a conversion rate of the hydrogen chloride to lower.

The method for adding moisture may be selected from the following methods:
· A method of merely supplying moisture into a hydrogen chloride gas;
· A method of generating hydrogen chloride from hydrochloric acid wherein moisture is added to the resulting hydrogen chloride gas since the moisture is entrained by the resulting hydrogen chloride gas; and
· A method of adding moisture by performing a humidification process to an unreacted oxygen gas which is to be added to a hydrogen chloride gas, the unreacted oxygen gas being obtained after the reaction by extracting from the collected reaction product gas containing the generated chlorine and an unreacted hydrogen chloride.

The hydrogen chloride is supplied at a supply rate of typically 10 - 2000 h⁻¹, preferably 200 - 1000 h⁻¹, more preferably 300 - 700 h⁻¹, in GHSV (hydrogen chloride (volume)/ catalyst (volume) at 0°C and 0.1 Mpa).

The gases to be reacted are heated so that the reaction proceeds, not only by supplying the gases to be reacted into the reactor, but also by individually circulating the heated heat mediums through respective ones of the divided regions formed in the reactor shell.

Typically, the heat mediums having the temperatures of about 260 to 280°C are firstly circulated through the respective ones of the divided regions. Due to the catalytic activities of the charged catalyst layers, the temperatures of the catalyst layers change over time. The controlling of the temperatures of the heat mediums is performed so that a difference (ΔTmax) between a heat medium temperature and the maximum temperature of each catalyst layer (each reaction zone in each reaction tube) located within each one of the divided regions remains to be within a predetermined range, typically from 0°C to 40°C. For example, in a case where an interior of the reactor shell is divided into five regions so that five reaction zones are formed, ΔTmax of each reaction zone is set as follows: ΔTmax for the first reaction zone from the inlet side of the reactor is set to be 15 to 40°C, preferably 20 to 35°C; ΔTmax for the second reaction zone from the inlet side of the reactor is set to be 10 to 30°C, preferably 15 to 25°C; ΔTmax for the third reaction zone from the inlet side of the reactor is set to be 10 to 25°C, preferably 10 to 20°C; and ΔTmax for the fourth and the fifth reaction zones from the inlet side of the reactor are set to be 0 to 15°C, preferably 5 to 10°C. If the temperature difference ΔTmax reaches over 40°C, there may occur a temperature runaway, which leads to an impossibility of the temperature control, undesirably. ΔTmax can be measured by a temperature sensor provided at a central portion of the reaction tube along the tube-axis direction. Typically, a plurality of the temperature sensors are provided in a plurality of the reaction tubes with a paired relationship of one temperature sensor to one reaction tube. In each reaction tube, there is provided a plurality of temperature detection points that differ from one another along the tube-axis direction. This leads to a simultaneous measurement of a plurality of Δmax for the respective ones of the reaction zones. In a case where gases to be reacted contain some compound deactivating the catalysts, the catalytic activity may deteriorate from the inlet side of the reactor, so that the position indicating ΔTmax would be shifted toward the downstream side of the reactor. Therefore, for an accurate measurement of ΔTmax, there is a need for shifting the detection points of the temperature sensor. In this regard, use of a multipoint thermometer allows an easy measurement of ΔTmax, desirably. The multipoint thermometer is a temperature sensor in which a plurality of temperature measuring points are provided.

By implementation of such temperature control, the hydrogen chloride conversion rates at respective ones of the outlets of the first to the fifth reaction zones become about 15 to 25%, about 35 to 45%, about 50 to 60%, about 65 to 75%, and about 80 to 90%, respectively. The conversion rates for the respective reaction zones (except for the final outlet reaction zone) can be expected from experiments, wherein a specific goal is to obtain a final conversion rate of about 80 to 90%.

As the reaction proceeds, the catalytic activity gradually deteriorates in each zone so that the conversion rate of the hydrogen chloride gradually lowers. Therefore, by keeping ΔTmax within the aforementioned range, the temperature of the heat medium for the first reaction zone is increased to achieve such a control that the final conversion rate is kept within the aforementioned range. In succession to the temperature increase of the heat medium for the first reaction zone, the temperature increases of the heat mediums for the second reaction zone and then for the third reaction zone are carried out in turn. It is, however, typical that the temperature of the last reaction zone in which the catalyst having the highest catalytic activity is charged is increased to the least possible. Finally, when the highest temperature of the reaction zones has become over 500°C, preferably over 400°C, a regeneration of the catalyst may be performed.

The reaction product gas is brought into contact with water or hydrochloric acid so as to be cooled, and also to absorb an unreacted hydrogen chloride gas therein, as described above. This is carried out by using an absorption tower such as a packed tower through which a hydrochloric acid is circulated. Typically, by means of the absorption tower with multiple stages, the unreacted hydrogen chloride gas is absorbed in the hydrochloric acid. In this absorption tower, low-concentration hydrochloric acid is put into circulation at the last stage, and the circulating hydrochloric acid of the succeeding stage is supplied to the preceding stage.

The absorption tower is made of tantalum, fluororesin lining, vinyl chloride resin lining, carbon or the like. It is preferable to use the tantalum. It is also preferable to use the fluororesin lining in which fluororesin sheets are provided in such a double setting that the space between the sheets communicates with the external, as described in JP 2003-63591 A.

Hydrochloric acid obtained due to the absorption of unreacted hydrogen chloride can be heated by a stripping towers such as a packed tower to generate a hydrogen chloride gas for reuse as a gas to be reacted. It is also possible that the dissolved chlorine of the hydrochloric acid is removed by bringing it into contact with an inert gas such as air by means of a packed tower or the like to give a hydrochloric acid containing no chlorine. This hydrochloric acid can be used as products, as required by adjusting the concentration thereof.

Typically, low-concentration hydrochloric acid is preferably used for an absorption process of hydrogen chloride by recycling to hydrogen-chloride generation plants, or otherwise used for any purpose if the concentration thereof is suitable. It is also possible to employ a two-stage distillation process described in JP 2001-139305 A wherein the pressures of the two stages are different from each other. In this process, the hydrogen chloride is obtained from the aforementioned hydrochloric acid in the first-stage distillation so as to be recycled to the reaction system while water is separated from within the process system in the second-stage distillation, and thereby the enhanced yield of chlorine can be achieved. The process is selected as required in consideration of hydrochloric acid balance or the energy to be used.

Typically, a chlorine-containing reaction product gas from which the unreacted hydrogen chloride has been removed by absorption is dried by using sulfuric acid.

In order to reduce the amount of the used sulfuric acid, the reaction product gas from which the hydrogen chloride has been removed by absorption is preferably cooled to about 15 to 20°C so that the amount of the entrained moisture is reduced. Higher temperatures may cause the amount of the entrained moisture to increase, whereas lower temperatures may cause chlorine hydrates to be deposited.

As in the case of an absorptive removal of the hydrogen chloride, the drying of the reaction product gas is carried out by means of a drying tower such as a packed tower through which the sulfuric acid is circulated. With this drying tower, the moisture content of the reaction product gas is reduced to 10 ppm (volume) or lower. Typically, it is preferable to use a drying tower with a bubble cap tray and a packing, as described in JP 2004-217455 A.

By using a packed tower with multiple stages wherein the concentrated sulfuric acid is put into circulation at the last stage, and the circulating sulfuric acid of the succeeding stage is supplied to the preceding stages, the moisture content can be removed. Typically, when 98 wt% of sulfuric acid is supplied to the packed tower, 70 to 80 wt% of sulfuric acid is obtained from the packed tower.

70 to 80 wt% of the resulting sulfuric acid is used for a neutralization process, or is discarded after a neutralization thereof. In this case, the dissoloved chlorine of the resulting sulfuric acid is removed by bringing it into contact with an inert gas (e.g., air) by means of a packed tower or the like.

The drying tower is made of hastelloy, fluororesin lining, vinyl chloride resin lining or the like.

The dried reaction product gas containing the chlorine is passed through a mist separator wherein the entrained sulfuric acid mist is eliminated. As the mist separator, a known one may be used, but not limited to this. Preferably, a mist separator packed with glass wool is used.

Subsequently, the chlorine-containing reaction product gas is compressed to about 0.5 to 5 MPa and cooled to about -10 to -40°C so that the chlorine is condensed, and thereby the unreacted oxygen gas is separated. As the compressor, turbo-type axial-flow compressors, centrifugal compressors, displacement-type reciprocating compressors, screw-type compressors and the like may be used. The compressor to be used is selected in consideration of a necessary pressure and a flow rate.

The condensed chlorine is stored as liquid chlorine, so that it can be afterward evaporated for use in various chlorination reactions. Alternatively the condensed chlorine is charged in containers or cylinders for shipment.

Merely condensing and cooling of the reaction product gas leads to a high oxygen concentration of the resulting condensed chlorine. Therefore, the liquid chlorine and the non-condensed gas, which are obtained by the cooling and the condensation steps, are supplied to a distillation tower such as a packed tower wherein an overhead gas is condensed, and then the resulting condensed liquid is refluxed to the distillation tower, and an oxygen-containing gas (i.e., non-condensed gas) is separated and collected. In this regard, by extracting liquid chlorine from the tower bottom, liquid chlorine having a smaller oxygen content can be obtained. It is also possible that the compressed reaction product gas is directly supplied to the distillation tower wherein the overhead gas is condensed, and then the condensed liquid is refluxed to the distillation tower, and an oxygen-containing gas (i.e., non-condensed gas) is separated and collected. Even in this case, the liquid chlorine having a smaller oxygen content can be extracted from the tower bottom.

Further, it is for example preferred that, in the cooling of the compressed reaction product gas, the reaction product gas is heat-exchanged with the liquid chlorine used for forming a chlorine gas. In this case, the reaction product gas is cooled by the latent heat of the liquid chlorine, whereas the chlorine gas is obtained from the liquid chlorine. Such heat exchange with the cooled material and the heated material is preferable in terms of energy saving.

The separated oxygen-containing gas that contains the entrained chlorine is typically collected and recycled for the reaction. In this case, the gas may contain the sulfuric acid mist used in the drying process. It is therefore preferred that the oxygen-containing gas to be recycled is washed by bringing it into contact with water in a packed tower or a scrubber tower disclosed in JP 2002-136825 A.

The scrubber tower is made of fluororesin lining, vinyl chloride resin lining, titanium, carbon or the like.

The separated oxygen-containing gas may contain not only the entrained chlorine but also carbon dioxide, nitrogen and the like, wherein the carbon dioxide is attributable to the oxidation of organic substances as impurities through the reaction, and the nitrogen is attributable to the leaking thereof from the compressor. Such carbon dioxide and nitrogen tend to be accumulated through a recycling process, and it is thus typical that a part of them are eliminated and then discarded.

### EXAMPLES

Hereinbelow, the present invention will be described in more detail by way of examples thereof, but the invention is not limited to the examples.

### <1> Preparation of catalysts

### (1) Catalyst 1:

Titanium oxide and α-alumina were mixed together at a mass ratio of 34 : 66 (titanium oxide : alumina), followed by being kneaded with adding pure water. The resulting mixture was extruded into a 1.5 mm-dia. columnar shape, and then dried and pulverized into about 2 to 4 mm lengths. The obtained molded product was baked in air atmosphere at about 600°C for 3 hours. As a result, a support (carrier) consisting of a mixture of the titanium oxide and the α-alumina was obtained.

The support was subsequently impregnated with an aqueous solution of ruthenium chloride, and after dried, baked in air atmosphere at 250°C for 2 hours. As a result, a supported ruthenium oxide was obtained wherein ruthenium oxide was supported on the support at a support rate of 1 mass%.

### (2) Catalyst 2:

Titanium oxide and α-alumina were mixed together at a mass ratio of 34: 66 (titanium oxide : alumina), followed by being kneaded with adding pure water. The resulting mixture was extruded into a 1.5 mm-dia. columnar shape, and then dried and pulverized into about 2 to 4 mm lengths. The obtained molded product was baked in air atmosphere at about 700 to 730°C for 3 hours. As a result, a support consisting of a mixture of the titanium oxide and the α-alumina was obtained.

The support was subsequently impregnated with an aqueous solution of ruthenium chloride, and after dried, baked in air atmosphere at 250°C for 2 hours. Thus, a supported ruthenium oxide was obtained wherein ruthenium oxide was supported on the support at a support rate of 2 mass%.

### (3) Catalyst 3:

Titanium oxide and α-alumina were mixed together at a mass ratio of 50 : 50 (titanium oxide : alumina). Subsequently, a 12.8 mass of titanium oxide sol (CSB made by Sakai Chemical Industry Co., Ltd., containing 39% of titanium oxide) relative to a 100 mass of a mixture of the titanium oxide and the α-alumina was diluted with pure water and then kneaded. The resulting mixture was extruded into a 1.5 mm-dia. columnar shape, and then dried and pulverized into about 2 to 4 mm lengths. The obtained molded product was baked in air atmosphere at about 650 to 680°C for 3 hours. As a result, a support consisting of a mixture of the titanium oxide and the α-alumina was obtained.

The support was subsequently impregnated with an aqueous solution of ruthenium chloride, and after dried, baked in air atmosphere at 250°C for 2 hours. As a result, a supported ruthenium oxide was obtained wherein ruthenium oxide was supported on the support at a support rate of 4 mass%.

### <2> Reactor

As a reactor for production of chlorine, a reactor similar to the reactor illustrated in Fig. 2 was used. It is noted that the heater (41) was provided for every one of the divided regions (31 - 34).

The reactor was a multi-tubular heat exchanger type reactor having the following design specifications:
· 158 Ni reaction tubes each having a length of 4200 mm, an inner diameter of 18 mm and a wall thickness of 1.7 mm;
· An equilateral-triangular arrangement of the reaction tubes with a reaction-tube pitch of 27 mm; and
. The reactor shell having an inner diameter of 450 mm.
The temperature sensors were inserted into respective ones of the five reaction tubes which were equidistantly arranged to a large extent near the middle region between the center and the external wall of the shell.

Tube plates and channel covers were made mostly of carbon steel, and their surfaces to be contacted with a process gas were lined with Ni thin plates by performing an explosion bonding process. The interior of the reactor shell was divided into four regions, wherein a 60 mm-thick intermediate tube plate was was placed at a 745 to 805 mm position from an upper end of the tube plate, a 6 mm-thick partitioning plate was placed at a 1505 to 1511 mm position from the inlet, and a 60 mm-thick intermediate tube plate was placed at a 2805 to 2865 mm position from the inlet. The intermediate tube plates and the reaction tubes were bonded together by performing a skin-contact tube expanding technique, whereas a gap of about 0.2 mm was formed between each plate and each reaction tube. Also, expansion joints were fitted on the reactor shell walls of the regions partitioned by the intermediate tube plates.

All the reaction tubes were charged with the above supported ruthenium oxide catalysts. Specifically, 30 kg of Catalyst 1 was charged at a 227 to 736 mm position from the reactor inlet, 80 kg of Catalyst 2 was charged at a 817 to 2158 mm position from the reactor inlet, and 114 kg of Catalyst 3 was charged at a 2176 to 4180 mm position from the reactor inlet. In the rest of the interior regions of the tube reactors, α-alumina balls were charged. As a result of this charging, 4.7% of the whole amount of ruthenium was located in 0 to 18% of the tube region from the reactor inlet, 24.6% of the whole amount of ruthenium was located in 18 to 54% of the tube region from the reactor inlet, and 70.7% of the whole amount of ruthenium was located in 54 to 100% of the tube region from the reactor inlet.

As a heat medium, a molten salt in which potassium nitrate and sodium nitrite were mixed at a ratio of 50 wt% to 50 wt% was used. The potassium nitrate and the sodium nitrite each containing no organic substances (e.g., consolidation inhibitors) were used, and it had previously been confirmed by a DSC calorimeter that they would not be thermally decomposed at a temperature ranging from room temperature to 500°C.

The heat medium was melted by indirect heating it with a 220°C steam in the heat medium tank. Subsequently, the melted heat medium was heated to 260 to 280°C by passing it through a circulating loop via an electric heater by means of a vertical type centrifugal volute pump provided for the heat medium tank, followed by being supplied to respective ones of the four-divided regions of the reactor. A circulating loop was provided for each of the divided regions, and the heat mediums were individually circulated through respective ones of the divided regions at a flow rate of about 20 m³/h by means of vertical type centrifugal volute pumps.

### <3> Oxidation reaction of hydrogen chloride

By supplying 35 wt% of hydrochloric acid at 650 kg/h to a stripping tower (packed tower), and heating the hydrochloric acid to about 146°C at the tower bottom, a hydrogen chloride gas as a raw material was obtained from the tower top of the stripping tower. The flow rate of the obtained hydrogen chloride was about 90 Nm³/h, the temperature thereof was about 75°C, and the hydrogen chloride concentration thereof was about 98.6 wt%, the rest component being moisture. The internal pressure of the tower was about 251 KPaG. From the tower bottom, hydrochloric acid water having a nearly azeotropic composition was obtained.

The hydrogen chloride-containing gas and the below-described collected oxygen gas (oxygen: 71.5 wt%, chlorine: 21.8 wt%, etc., about 26 Nm³/h) were mixed together. The mixed gas was heated to about 170°C by a heat exchanger made of tantalum, with steam serving as the heat source, and thereafter mixed with about 19 Nm³/h of preheated oxygen (purity: 99.7 vol%, other components: argon and nitrogen). The resulting gas mixture was heated to about 200°C by means of a heat exchanger made of nickel with steam serving as the heat source, followed by being introduced into the above-described reactor wherein an oxidation reaction of the hydrogen chloride was carried out.

The gas exiting from the outlet of the reactor was delivered to an absorption tower wherein about 150 kg/h of water was supplied from the tower top of the adsorption tower so that the unreacted hydrogen chloride gas was absorbed into the water, and thereby the resulting hydrochloric acid is collected from the tower bottom of the absorption tower. The concentration of the collected hydrochloric acid was about 10 wt%. In this example, the collected hydrochloric acid was subjected to a stripping process using air to eliminate the dissolved chlorine, and thereafter was neutralized and then discarded.

The gas exiting from the tower top of the absorption tower was subsequently introduced to a drying tower so as to be brought it into contact with 3 kg/h of 98 wt% concentrated sulfuric acid. As a result, the above gas was dried to such a level that a moisture content thereof was about 10 volppm or lower.

The dried gas was subsequently introduced to a blink-type filter to separate off sulfuric acid mist, and then introduced to a reciprocating compressor so that the pressure of the gas was increased up to 870 KPaG. The compressed gas was introduced to a distillation tower wherein two kettle-type heat exchangers serving as condensers were provided at the tower top, their tube portions being connected in series to each other. In this distillation tower, the gas exiting from the tower top was introduced to the two kettle-type heat exchangers, and thereby the gas was cooled. The below-described liquid chlorine was introduced to the shell portion of the first-stage condenser so as to be vaporized, and thereby the gas exiting from the tower top was cooled to about -10°C due to the resulting latent heat of the vaporization. The fluorinated hydrocarbon (R-22) was vaporized in the second-stage shell portion, and thereby the gas from the first-stage condenser was cooled to about -30°C. The resulting condensed liquid was used as a reflux liquid. Some of the uncondensed gas that had passed through the tube portion of the second-stage condenser, whose flow rate was about 26 Nm³/h, was washed with water to eliminate the sulfuric acid mist, followed by being introduced to the reaction system as the above-described collected oxygen. Further, in order to maintain the distillation tower at a pressure of about 850 KPaG, some of the uncondensed gas was used as a purge gas. The flow rate of the purge gas was about 0.5 to 1 Nm³/h.

The distillation was carried out by means of an exocyclic reboiler provided at the bottom of the distillation tower wherein the tower bottom liquid was heated to a temperature of about 30°C with 60°C warm water serving as a heat source. As a result, the rectified liquid chlorine was obtained from the tower bottom. The resulting liquid chlorine was introduced to the shell portion of the first-stage condenser provided at the tower top so as to be gasified, followed by being further heated. As a result, about 125 kg/h of chlorine gas was finally obtained wherein a chlorine purity was 99.7 vol%.

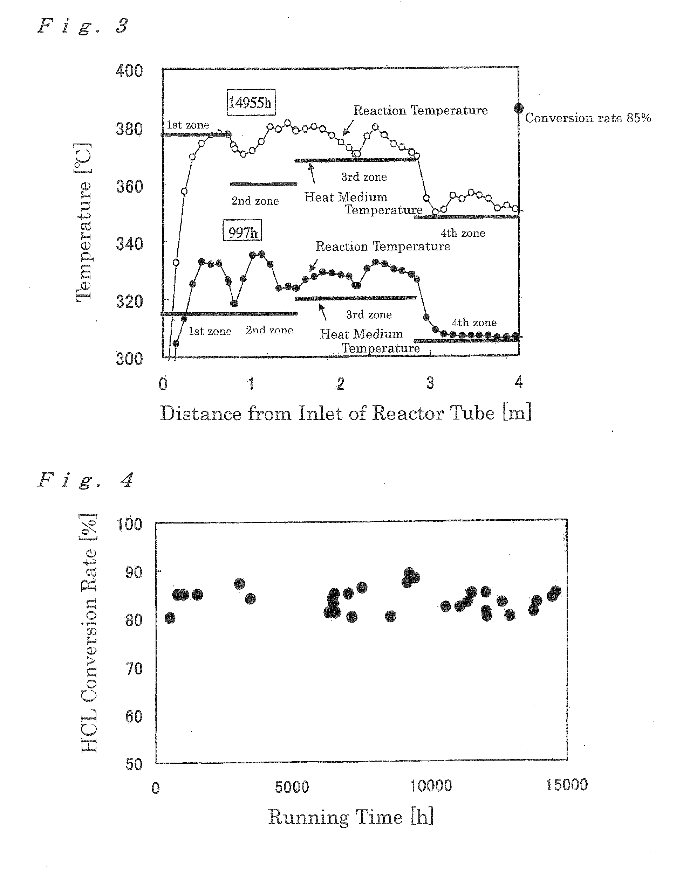

After the introduction of the raw material gas to be reacted, the values of ΔTmax for respective ones of the catalyst layers (reaction zones) located in respective ones of the divided regions of the reactor shell were controlled as follows. After the reaction started with heat medium temperatures of 265 to 280°C, the temperatures of the first to the fourth reaction zones were individually controlled such that ΔTmax for the first and the second reaction zones were kept to be 20 - 30°C and ΔTmax for the third and the fourth reaction zones were kept to be 0 - 20°C, and thereby the conversion rate at the reactor outlet was kept to be in a range of 80 to 90%. The conversion rate was determined from the quantity of the hydrogen chloride gas introduced to the reactor, the flow rate and concentration of the unreacted hydrochloric acid collected from the absorption tower. Due to the deterioration of the catalytic activity over time, ΔTmax tended to lower gradually. Thus, the heat medium temperature of the first reaction zone was elevated by degrees. However, when the temperature of the first reaction zone reached beyond 380°C, it was not elevated any more and the heat medium temperatures of the other reaction zones were controlled. In this way, the reaction was conducted continuously for 14600 hours. Temperature distributions of the catalyst layers after 997 hours since the reaction start, and temperature distributions after 14595 hours since the reaction start are shown in Fig. 3 together with the measured heat medium temperatures. An average temperature of the catalyst layers after 997 hours was 319°C, whereas an average temperature of the catalyst layers after 14595 hours was 364°C. The average temperature 364°C after 14595 hours was due to that the heat medium temperatures for the respective layers were elevated with the deterioration of the catalyst. Transitions of the HCL conversion rate at the reactor outlet from the reaction start until an end point of the reaction are shown in Fig. 4. The conversion rate was about 80 to 90%, resulting in an average conversion rate of about 85%.

The present invention as described above includes the following aspects:
The first aspect: A reactor for chlorine production, which is a multi-tubular heat exchanger type reactor for use in producing chlorine by oxidizing hydrogen chloride with oxygen, wherein an interior of a reactor shell is divided in a tube-axis direction by at least one partition into a plurality of regions, the reactor comprising a temperature control means for controlling the temperature of at least one heat medium selected from heat mediums that individually circulate through respective ones of the divided regions.
The second aspect: The reactor as defined in the first aspect, wherein the interior of the reactor shell is divided into 2 to 10 stage regions.
The third aspect: The reactor as defined in the first or the second aspect, wherein the temperature control means comprises a cooler and/or a heater.
The fourth aspect: The reactor as defined in any one of the first to the third aspects, wherein catalysts having different catalytic activities are charged in the form of layers from inlets towards outlets of reaction tubes of the reactor.
The fifth aspect: The reactor as defined in any one of the first to the third aspects, wherein catalysts are charged such that a catalytic activity is higher from inlets towards outlets of the reaction tubes.
The sixth aspect: The reactor as defined in any one of the first to the fifth aspects, wherein an inert substance is charged at the inlet portions and/or the outlet portions of the catalyst layers and/or between the catalyst layers, the catalyst layers being charged in reaction tubes of the reactor.
The seventh aspect: The reactor as defined in any one of the fourth to the sixth aspects, wherein the catalysts are ruthenium oxide catalysts.
The eighth aspect: The reactor as defined in the seventh aspect, wherein 40% or less of the whole ruthenium is in the region of the reaction tubes ranging from the reaction tube inlet to less than 50% of the reaction tube length, whereas 60% or more of the whole ruthenium is in the region of the reaction tubes ranging from 50 to 100% of the reaction tube length from the reaction tube inlet.
The ninth aspect: A process for producing chlorine, characterized in that the process comprises the step of supplying a hydrogen chloride-containing gas and an oxygen-containing gas into the reactor as defined in any one of the first to the eighth aspects so as to oxidize the hydrogen chloride with the oxygen at a pressure of 0.1 to 1 MPaG and a temperature of 200 to 500 °C.
The tenth aspect: The process as defined in the ninth aspect, wherein the hydrogen chloride is supplied at a supply rate (GHSV) of 100 to 2000/hr per amount of the charged catalysts, based on standard temperature and pressure.
The eleventh aspect: The process as defined in the ninth or tenth aspect, wherein a molar ratio of the oxygen to the hydrogen chloride is 0.25 to 2.
The twelfth aspect: The process as defined in the ninth aspect, the process further comprising of the step of collecting the unreacted hydrogen chloride and/or oxygen so as to supply them into the reactor.
The thirteenth aspect: The process as defined in the ninth aspect, the process further comprising the steps of:
   measuring the temperatures of the catalyst layers charged in each reaction tube by means of a temperature sensor such that the temperatures of respective ones of the catalyst layers located within respective ones of the divided regions are obtained; and
   controlling a temperature of each heat medium such that a difference (ΔTmax) between the maximum temperature of each catalyst layer and each heat medium temperature remains to be in a predetermined range.
The fourteenth aspect: The process as defined in the thirteenth aspect, wherein the ΔTmax remains to be in the range of 0 to 40°C.
The fifteenth aspect: The process as defined in the thirteenth aspect, wherein the temperature sensor is a multipoint thermometer in which a plurality of measuring points are provided.

### INDUSTRIAL APPLICABILITY

According to the present invention, catalysts can be effectively used and a catalytic activity can be kept stable, so that chlorine can be steadily produced from hydrogen chloride with high yield.

## Claims

1. A reactor for chlorine production, which is a multi-tubular heat exchanger type reactor for use in producing chlorine by oxidizing hydrogen chloride with oxygen, wherein
an interior of a reactor shell is divided in a tube-axis direction by a partition into a plurality of regions such that heat mediums individually circulate through respective ones of the divided regions;
said reactor comprising a temperature control means for at least one heat medium selected from said heat mediums, the temperature control means being a cooler and/or a heater;
catalysts having different catalytic activities are charged in the form of layers from inlets towards outlets of reaction tubes of the reactor, the catalysts being ruthenium oxide catalysts; and
40% or less of the whole ruthenium is in the region of the reaction tubes ranging from the reaction tube inlet to less than 50% of the reaction tube length, whereas 60% or more of the whole ruthenium is in the region of the reaction tubes ranging from 50 to 100% of the reaction tube length from the reaction tube inlet.

2. A process for producing chlorine, wherein
the process is performed by using a multi-tubular heat exchanger type reactor for use in producing chlorine by oxidizing hydrogen chloride with oxygen wherein an interior of a reactor shell is divided in a tube-axis direction by a partition into a plurality of regions such that heat mediums individually circulate through respective ones of the divided regions; said reactor comprising a temperature control means for at least one heat medium selected from said heat mediums, the temperature control means being a cooler and/or a heater; catalysts having different catalytic activities are charged in the form of layers from inlets towards outlets of reaction tubes of the reactor, the catalysts being ruthenium oxide catalysts; and 40% or less of the whole ruthenium is in the region of the reaction tubes ranging from the reaction tube inlet to less than 50% of the reaction tube length, whereas 60% or more of the whole ruthenium is in the region of the reaction tubes ranging from 50 to 100% of the reaction tube length from the reaction tube inlet,
the process comprising the step of supplying a hydrogen chloride-containing gas and an oxygen-containing gas into said reactor so as to oxidize the hydrogen chloride with the oxygen at a pressure of 0.1 to 1 MPaG and a temperature of 200 to 500°C.

3. The process according to claim 2, further comprising the steps of:
measuring the temperatures of the catalyst layers charged in each reaction tube by means of a temperature sensor such that the temperatures of respective ones of the catalyst layers located within respective ones of the divided regions are measured; and
controlling a temperature of each heat medium such that a difference (ΔTmax) between the maximum temperature of each catalyst layer and each heat medium temperature remains to be in a predetermined range.

4. The process according to claim 3, wherein said ΔTmax remains to be in the range of 0 to 40°C.

5. The process according to claim 3, wherein the temperature sensor is a multipoint thermometer in which a plurality of measuring points are provided.
